# EUROPÄISCHE PATENTSCHRIFT

(11) **EP 0 349 673 B1**
(45) Veröffentlichungstag und Bekanntmachung des Hinweises auf die Patenterteilung: **02.06.1993**
(21) Anmeldenummer: 88118380.0
(22) Anmeldetag: 04.11.1988
(51) Int. Cl.: G01F 23/00, G01F 25/00, G01F 23/24

(54) **Gerät zur Messung des Füllstands eines Kraftstofftanks**
Device for the measurement of the fluid level of a fuel
Dispositif de mesure du niveau de remplissage d'un réservoir de carburant

(30) Priorität: 06.07.1988 DE 3822846
(43) Veröffentlichungstag der Anmeldung: 10.01.1990
(73) Patentinhaber: VDO Adolf Schindling AG, D-60487 Frankfurt (DE)
(72) Erfinder: Kotulla, Günther, D-6231 Sulzbach/Ts. (DE)
(74) Vertreter: Klein, Thomas, Dipl.-Ing. (FH)

(56) Entgegenhaltungen:
- EP-A- 0 170 730
- EP-A- 0 240 598
- EP-A- 0 289 172
- EP-A- 0 289 303
- EP-A- 0 302 173
- EP-A- 0 310 298
- DE-A- 3 444 138
- DE-A- 3 639 455
- US-A- 4 731 730
- PATENT ABSTRACTS OF JAPAN, Band 6, Nr. 41 (P-106)[919], 13. März 1982;& JP-A-56 158 913
- PATENT ABSTRACTS OF JAPAN, Band 9, Nr. 320 (P-413)[2043], 14. Dezember 1985;& JP-A-60 146 117

## Beschreibung

Die Erfindung betrifft ein Gerät zur Messung des Füllstands eines Kraftstofftanks eines Kraftfahrzeugs, bei dem ein Geber ein vom Füllstand abhängiges Gebersignal an eine elektronische Signalverarbeitungseinheit abgibt, in der ein Programm zur Auswertung des Gebersignals und zur Ansteuerung einer Anzeigevorrichtung vorgesehen ist.

Bei bekannten Geräten zur Messung des Füllstands eines Kraftstofftanks - im folgenden Tankmeßgeräte genannt - ist vor dem Einbau in das Kraftfahrzeug ein Abgleich erforderlich, bei dem insbesondere Toleranzen des Gebers und einer dazugehörenden elektronischen Schaltung ausgeglichen werden. Dieser Abgleichvorgang erfordert Zeit und aufwendige Meß- und Prüfmittel.

Bei den bekannten Tankmeßgeräten ist ferner im Falle eines Defekts der Austausch gegen ein komplettes neu abgeglichenes Tankmeßgerät notwendig, auch wenn nur der Geber oder die Elektronik defekt ist.

Bei den bekannten Tankmeßgeräten werden ferner für verschiedene Kraftfahrzeugmodelle unterschiedliche Ausführungen benötigt. Dieses ist beispielsweise erforderlich, weil die Kennlinie des Gebers - d. h. der Zusammenhang zwischen dem Gebersignal und dem Füllstand von der Tankform abhängig ist.

Aus der US-A-47 31 730 ist ein Gerät zur Messung des Füllstandes eines Kraftstofftanks bekannt, das für verschiedene Typen von Kraftstofftanks verwendbar ist. Entsprechend der verschiedenen Typen von Kraftstofftanks sind in einer Speichereinheit der Elektronik die entsprechenden Gruppen verschiedener Tankparameter abgelegt. Entsprechend dem jeweiligen Kraftstofftanktyp, der mit einem derartigen Füllstandsmeßgerät ausgestattet werden soll, kann die diesem Kraftstofftanktyp entsprechende Gruppe von Tankparametern ausgewählt werden.

Aus der EP-A-310 298 ist eine Einrichtung zur Messung des Inhalts eines Tanks bekannt, bei der das Signal eines Füllstandssensors mit dem Signal einer Entnahmevorrichtung verglichen wird. Bei Abweichung der von der Entnahmevorrichtung gemessenen Entnahmemenge wird ein entsprechendes Korrektursignal gebildet, mit dem die Tankinhaltsanzeige korrigierend angesteuert wird.

Weiterhin ist aus der EP-A-240 598 ein Gerät zur Erfassung des Füllstands eines Kraftstofftanks bekannt, das eine Analogfüllstandssonde und eine Digitalfüllstandssonde aufweist, die auf einem gemeinsamen Träger angeordnet sind und deren Meßwerte miteinander verglichen und bei Abweichung der Meßwerte voneinander entsprechende Korrekturwerte gebildet werden. Mit Hilfe der Korrekturwerte werden die Meßwerte der Analogsonde korrigiert und angezeigt.

Aufgabe der vorliegenden Erfindung ist es, ein Tankmeßgerät anzugeben, das die obengenannten Nachteile möglichst nicht aufweist und ferner wesentliche wirtschaftliche Vorteile bei der Herstellung und Prüfung und bei späteren Reparaturarbeiten ermöglicht.

Das erfindungsgemäße Gerät ist dadurch gekennzeichnet, daß in der elektronischen Signalverarbeitungseinheit neben dem Programm zur Auswertung des Gebersignals und zur Ansteuerung der Anzeigevorrichtung weiterhin ein Programm vorgesehen ist, welches bei der erstmaligen Inbetriebnahme der mit dem Geber zusammengeschalteten elektronischen Signalverarbeitunghseinheit bei einem bekannten Füllstand, vorzugsweise bei leerem Tank, aus dem Verhältnis zwischen dem Gebersignal und einem abgespeicherten Sollwert ein Korrekturwert bildet und in einem nichtflüchtigen Speicher ablegt.

Der nichtflüchtige Speicher kann vorzugsweise von einem NV-RAM gebildet sein, es ist jedoch auch ein batteriegepufferter Schreib-Lese-Speicher (RAM) oder ein elektrisch löschbarer programmierbarer Nur-Lese-Speicher (EEPROM) geeignet.

Das erfindungsgemäß Gerät kann in einfacher Weise durch Austausch des nichtflüchtigen Speichers an verschiedene Kraftfahrzeugmodelle und Geberexemplare angepaßt werden. Die Korrekturwerte können dabei zusätzlich zur Tabelle in den nichtflüchtigen Speicher einschreibbar sein oder durch Modifikation der Tabelle gespeichert werden.

Eine Weiterbildung der Erfindung besteht darin, daß ein erster Abgleich bei mindestens einem vorgegebenen Füllstand durchführbar ist, daß dabei Korrekturwerte ermittelbar und einschreibbar sind und daß nach dem ersten Abgleich eine Information in den nichtflüchtigen Speicher einschreibbar ist, welche den erfolgten ersten Abgleich bedeutet. Durch diese Maßnahmen entfällt der arbeitsintensive Abgleich nach der Montage des Tankmeßgeräts.

Eine andere Weiterbildung ermöglicht einen Abgleich während des Betriebs dadurch, daß ein weiterer Geber vorgesehen ist, der ein binäres Gebersignal abgibt, das bei einem vorgegebenen Füllstand seinen Pegel ändert, und daß das binäre Gebersignal zusammen mit dem Gebersignal zur Bildung der Korrekturwerte herangezogen wird, wenn zuvor ein erster Abgleich erfolgt ist.

Durch die in den Unteransprüchen aufgeführten Maßnahmen sind vorteilhafte Weiterbildungen und Verbesserungen der im Hauptanspruch angegebenen Erfindung möglich.

Unter anderem können in dem nichtflüchtigen Speicher weitere Informationen abgelegt werden, beispielsweise der Zusammenhang zwischen einem Ausgangssignal, das von der elektronischen Signalverarbeitungsschaltung an eine Anzeigevorrichtung gegeben wird, und den angezeigten Werten - insbesondere die Kennlinie eines Anzeigeinstrumentes. Die weiteren Informationen können auch die Art der Dämpfung und das Einschaltverhalten der Anzeigevorrichtung betreffen.

Ferner kann der nichtflüchtige Speicher dazu verwendet werden, daß beim Abschalten der Betriebsspannung der zuletzt gültige Anzeigewert gespeichert und nach einem Wiedereinschalten ausgelesen und zur Anzeige gebracht wird. Dadurch kann unmittelbar nach dem Einschalten der Zündung der Kraftstoffvorrat abgelesen werden. Selbst der Spannungseinbruch, der durch den Anlaßvorgang bedingt ist, bewirkt keine falsche oder verzögerte Anzeige.

Bei dem erfindungsgemäßen Gerät können auch mehrere wahlweise aktivierbare Programme oder Programmodule vorgesehen sein, welche die verschiedenen Anforderungen bei verschiedenen Kraftfahrzeugmarken und -modellen berücksichtigen. Dadurch, daß gemäß einer Weiterbildung im nichtflüchtigen Speicher Informationen darüber abgelegt sind, welche Programme oder Programmodule jeweils aktiviert werden, kann das erfindungsgemäße Gerät in einfacher Weise durch Einsetzen des jeweils richtigen nichtflüchtigen Speichers an verschiedene Fahrzeuge angepaßt werden.

Bei einer anderen Weiterbildung der Erfindung ist ein Programm vorgesehen, das bei Defekten Fehlermeldungen abgibt, wobei die abgegebenen Fehlermeldungen in dem nichtflüchtigen Speicher abgelegt werden. Dadurch kann bei einer späteren Diagnose leicht die Ursache des Defekts herausgefunden werden. So kann beispielsweise eine Fehlermeldung erfolgen, wenn infolge einer fehlerhaften Verbindung zwischen der Signalverarbeitungseinheit und dem Geber bei dem Erstabgleich oder bei einem späteren Abgleich ein Korrekturfaktor ermittelt wird, der außerhalb eines vorgegebenen Bereichs liegt. Dabei wird ein diesem Fehlerfall zugeordneter Code in den nichtflüchtigen Speicher eingeschrieben, an dem erkennbar ist, daß der Defekt im Bereich der Zuleitungen bzw. im Bereich des Gebers liegt.

Da die zur Zeit erhältlichen NV-RAMs mit zunehmender Zahl von Schreibvorgängen altern, kann ferner vorgesehen sein, daß eine Fehlermeldung erzeugt wird, wenn nach einem wiederholten Versuch, Daten in eine Zelle des NV-RAMs einzuschreiben, ein Vergleich der Daten im Arbeitsspeicher und in der Zelle des NV-RAMs immer noch eine Ungleichheit ergibt. Bei einer späteren Diagnose, beispielsweise im Falle einer Routinewartung, kann dann erkannt werden, daß das NV-RAM auszuwechseln ist.

Vorzugsweise kann der erste Abgleich bei leerem Tank durchgeführt werden. Außerdem kann gemäß einer Weiterbildung der Erfindung nach der Durchführung des ersten Abgleichs die Reserve-Anzeigeleuchte aufleuchten, so daß sichtbar wird, wenn der erste Abgleich durchgeführt ist.

Bei Gebern, welchen ein Strom zugeführt wird, kann anstelle des Korrekturfaktors bei dem ersten Abgleichvorgang derjenige Strom ermittelt werden, der zu einem korrekten Gebersignal bei dem vorgegebenen Füllstand führt, und die Größe des Stroms in den nichtflüchtigen Speicher abgelegt wird.

Die Erfindung läßt zahlreiche Ausführungsformen zu. Eine davon ist schematisch in der Zeichnung anhand mehrerer Figuren dargestellt und nachfolgend beschrieben. Es zeigt:
- Fig. 1: eine schematische Darstellung eines für das erfindungsgemäße Gerät geeigneten Gebers,
- Fig. 2: Kennlinien des in Fig. 1 dargestellten Gebers,
- Fig. 3: ein Blockschaltbild eines Ausführungsbeispiels,
- Fig. 4: eine genauere Darstellung der Kennlinie des Gebers,
- Fig. 5: ein Flußdiagramm eines Programms für den Erstabgleich und
- Fig. 6: ein Flußdiagramm eines Programms für den Meßbetrieb.

Gleiche Teile sind in den Figuren mit gleichen Bezugszeichen versehen.

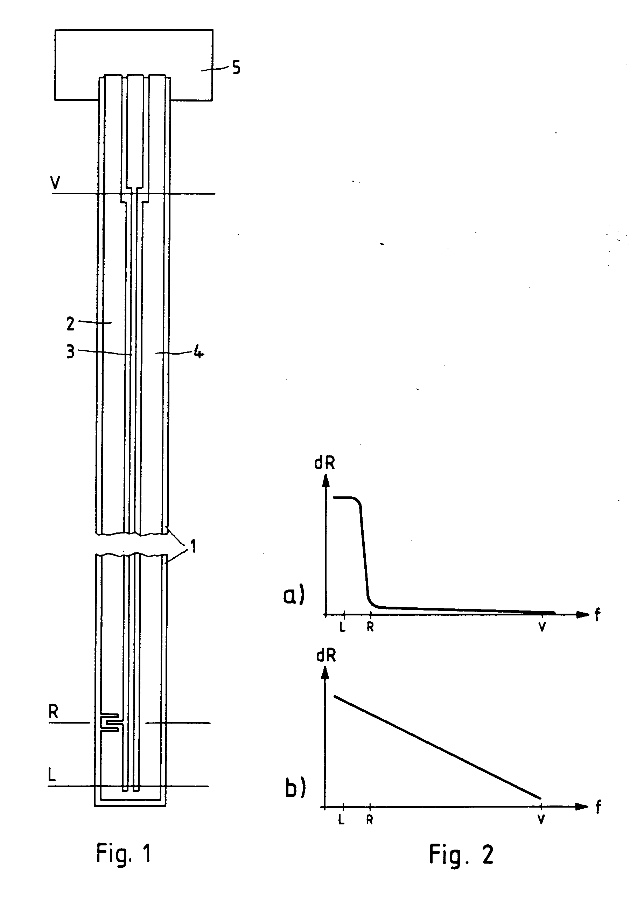

Bei dem in Fig. 1 dargestellten Geber sind auf einer Folie 1 drei Leiterbahnen 2, 3, 4 aufgebracht. Die Folie erstreckt sich über die vertikale Ausdehnung eines nicht dargestellten Kraftstoffbehälters und wird in ebenfalls nicht dargestellten Führungsteilen gehalten. Am oberen Ende ist die Folie mit den Leitern aus dem Kraftstoffbehälter herausgeführt, etwa rechtwinklig abgebogen und in ein Anschlußgehäuse 5 eingeführt.

Die mittlere Leiterbahn 3 ist als Analoggeber ausgeführt, wozu sie im gesamten zumessenden Füllstandsbereich (von L = leer bis V = voll) einen gleichmäßiben Querschnitt aufweist. Oberhalb des Füllstandsbereichs ist die Leiterbahn breiter, wodurch sich wegen der geringeren Stromdichte eine geringere Erwärmung ergibt, so daß durch Widerstandsänderungen dieses Teils das Meßergebnis möglichst nicht verfälscht wird.

Die Leiterbahn 2 ist während des weitaus größten Teils ihrer Länge mit einem großen Querschnitt versehen, so daß hier ebenfalls keine störende Erwärmung auftritt. Lediglich an der Grenze zum Reservebereich R ist der Querschnitt wesentlich geringer. Damit sich weiterhin der Widerstand bzw. die Widerstandsänderung auf diesen Füllstandswert konzentriert, ist in diesem Bereich die Leiterbahn 2 mäanderförmig ausgebildet. In diesem Zusammenhang sei erwähnt, daß bei dem im folgenden beschriebenen Ausführungsbeispiel ein Nachabgleich bei dem Füllstand R erfolgt. Es ist jedoch im Rahmen der Erfindung auch möglich, bei mehreren Füllstandswerten während des Betriebes Nachabgleiche vorzunehmen. Die Leiterbahn 4 dient als gemeinsame Rückleitung für die als Geber ausgebildeten Leiterbahnen 2 und 3.

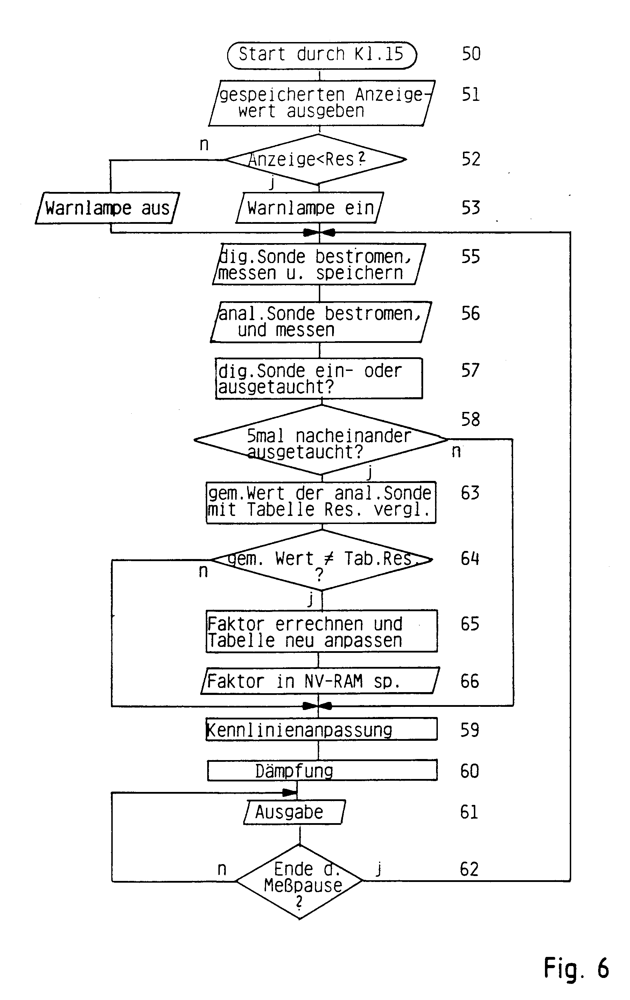

Zur Messung des Füllstands wird die Leiterbahn 3 - im folgenden auch Analoggeber genannt - kurzzeitig mit einem konstanten Strom beaufschlagt. Der sich während der Dauer des Stromflusses ergebende Spannungsanstieg ist ein Maß für die Widerstandserhöhung und somit für den Anteil der Leiterbahn 3, der nicht mit Flüssigkeit bedeckt ist. Auch die Leiterbahn 2 - später auch Digitalgeber genannt - wird kurzzeitig mit einem konstanten Strom beaufschlagt, wobei sich wegen des größeren Widerstandes im Bereich von R eine merkliche Widerstandserhöhung nur ergibt, wenn dieser Bereich nicht gekühlt wird, wenn also der Füllstand unterhalb von R ist. Wie später im Zusammenhang mit Fig. 6 noch erläutert wird, wird diese Messung während des normalen Meßablaufs zum Nachabgleich herangezogen.

Fig. 2a) zeigt eine Kennlinie des Analoggebers 3, während Fig. 2b) eine Kennlinie des Digitalgebers 2 darstellt. Während bei dem Analoggeber 3 die Widerstandsänderung dR etwa linear mit dem Füllstand F verläuft, ändert sich die Widerstandsänderung dR bei dem Digitalgeber sprunghaft bei dem Füllstand R.

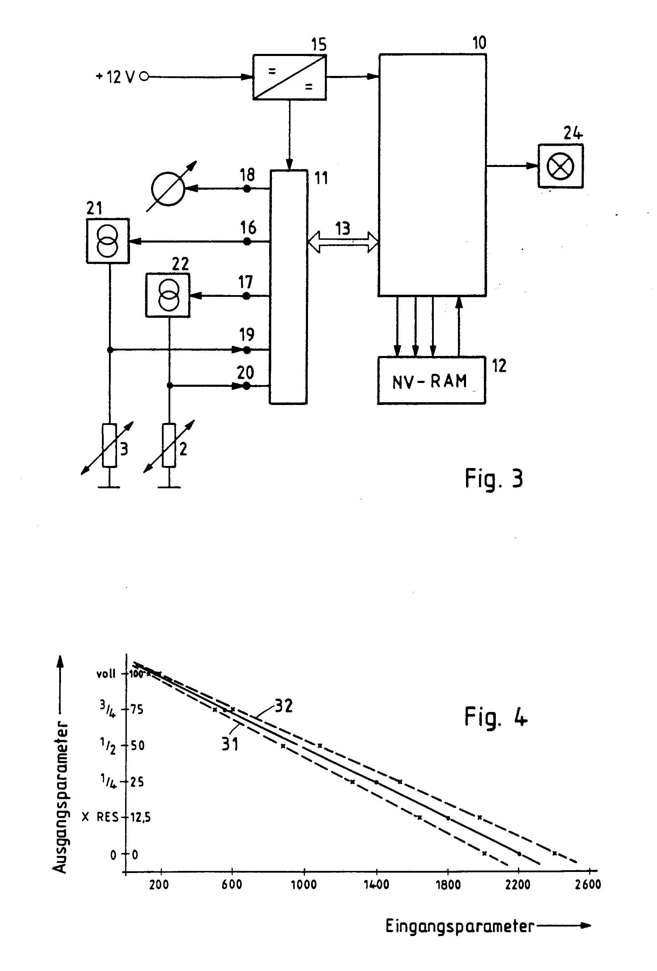

Das Ausführungsbeispiel gemäß Fig. 3 umfaßt einen Mikrocomputer 10, eine Ein/Ausgabe-Einheit 11 und einen nichtflüchtigen Speicher 12. Der lediglich schematisch dargestellte Mikrocomputer enthält in an sich bekannter Weise einen Prozessor, einen Programmspeicher sowie einen Arbeitsspeicher und einen zur Verbindung dieser Einheiten dienendes Bussystem 13, welches auch für die Datenübertragung zwischen dem Mikrocomputer 10 und der Ein/Ausgabe-Einheit 11 sorgt. Batteriespannung wird über einen Anschluß 14 einem Stromversorgungsgerät 15 zugeführt, welches die zum Betrieb des Mikrocomputers erforderliche stabilisierte Spannung bereitstellt und außerdem an sich bekannte Schutzschaltungen beinhaltet.

Die Ein/Ausgabe-Einheit 11 verfügt über Ausgänge 16, 17, 18 und über Eingänge 19, 20 für Analogsignale. Es sind deshalb in der Ein/Ausgabe-Einheit 11 in an sich bekannter Weise Digital/Analog-Wandler, Analog/Digital-Wandler und Multiplexer vorgesehen.

An die Ausgänge 16, 17 ist jeweils eine steuerbare Stromquelle 21, 22 angeschlossen. Diese dienen zur Erzeugung jeweils eines Stroms durch die Geber 2, 3. Die Spannung an den Gebern, welche bei konstantem Strom ein Mäß für den Widerstand der Geber darstellen, werden den Eingängen 19, 20 der Ein/Ausgabe-Einheit zugeführt.

An den Ausgang 18 der Ein/Ausgabe-Einheit 11 ist ein Anzeigeinstrument 23 für den Füllstand angeschlossen. Außerdem ist eine Warnlampe 24 mit einem Ausgang des Mikrocomputers 10 verbunden.

Sobald nach der Fertigung eines erfindungsgemäßen Geräts bekannt ist, für welches Kraftfahrzeug das Gerät vorgesehen ist, und welcher von verschiedenen Gebern dazu erforderlich ist, wird das Gerät entsprechend programmiert. Dieses kann durch Einsetzen eines mit den erforderlichen Daten versehenen nichtflüchtigen Speichers 12 geschehen oder gegebenenfalls auch durch Programmierung des Geräts, wenn der nichtflüchtige Speicher bereits eingesetzt ist. Diese Daten bestehen im wesentlichen aus einer Tabelle, in welcher der anzuzeigende Füllstand als Funktion der Ausgangsspannung des Gebers in Form von genügend vielen Stützwerten abgelegt ist. Dabei ist einerseits das Verhalten des jeweiligen Gebertyps und die Form des Kraftstofftanks berücksichtigt. Es kann ferner mit der Tabelle die Kennlinie des Anzeigeinstruments 23 erfaßt sein.

Ein spezieller auf den individuellen Geber abgestimmter Korrekturwert ist zunächst noch nicht gespeichert. Dieser wird bei der ersten Inbetriebnahme im zusammengebauten Zustand ermittelt und im nichtflüchtigen Speicher 12 abgelegt. Je nach Ausführungsform kann dieser Korrekturwert als Korrekturfaktor zusätzlich zur Tabelle gespeichert werden und bei dem Ablauf des normalen Meßprogramms berücksichtigt werden. Es können jedoch auch durch den ersten Abgleich korrigierte Tabellenwerte gespeichert werden. Eine weitere Möglichkeit eines Abgleichs besteht darin, den Strom durch den Geber derart abzugleichen, daß unter Berücksichtigung der Tabellenwerte eine korrekte Anzeige erfolgt. Der Wert dieses Stroms kann in diesem Fall als Korrekturwert im nichtflüchtigen Speicher 12 abgelegt werden.

Das Diagramm gemäß Fig. 4 zeigt die Abhängigkeit der Anzeige (Ausgangsparameter) von dem Gebersignal (Eingangsparameter), wobei die Eingangsparameter in Zahlenwerten angegeben sind, wie sie in zweckmäßiger Weise im nichtflüchtigen Speicher gespeichert werden. Die durchgezogene Linie ist im Neuzustand des Geräts im nichtflüchtigen Speicher abgelegt und stellt den Verlauf eines beliebigen Sensors dar.

Für einen ersten Abgleich - im folgenden Erstabgleich genannt - wird das Gerät bei leerem Tank in Betrieb genommen. Dabei erfolgt eine Anzeige "leer", wenn das Gebersignal dem Wert 2200 entspricht. Bei einem Geber, der beispielsweise durch Fertigungstoleranzen bedingt, einen Verlauf gemäß Kennlinie 31 aufweist, entspricht das Gebersignal jedoch nur dem Istwert 2000. Durch Division durch den Sollwert 2200 wird der Korrekturfaktor FK abgeleitet und anschließend gespeichert. Die Kennlinie 32 stellt den abweichenden Verlauf eines anderen Gebers dar, bei welchem der Korrekturfaktor ein anderer FK = 2400/2200 ist. Beim späteren Meßbetrieb werden dann die Tabellenwerte mit FK multipliziert. Nach einem Erstabgleich mit einem Geber mit der Kennlinie 31 werden die Tabellenwerte also mit FK = 2400/2200 multipliziert, wodurch an den Geber angepaßte Tabellenwerte entstehen.

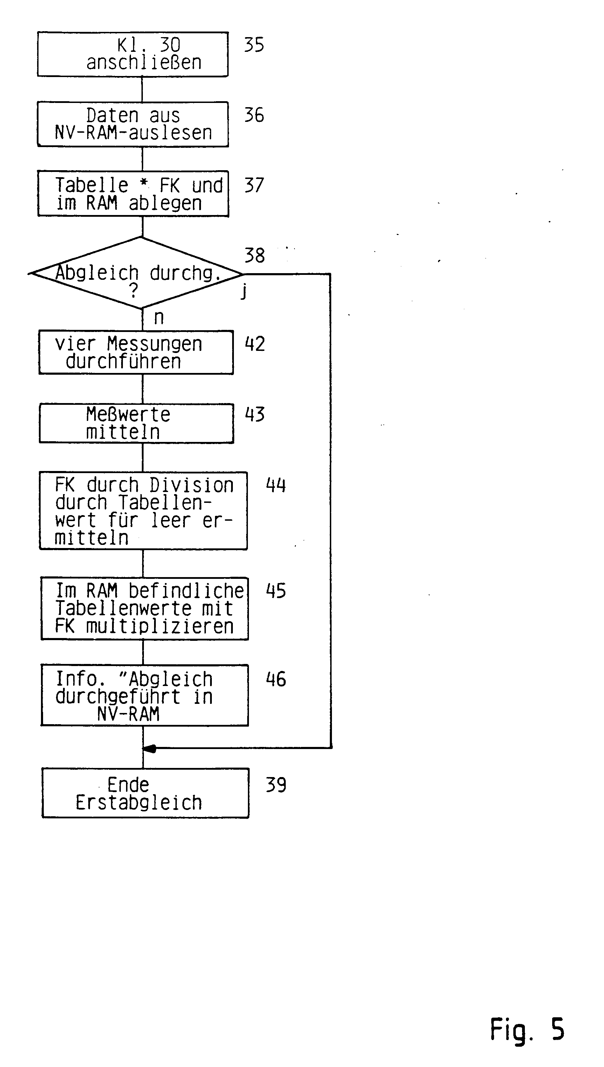

Zur weiteren Erläuterung des Erstabgleichs wird auf das in Fig. 5 dargestellte Flußdiagramm Bezug genommen. Mit dem Anschließen des Geräts an Klemme 30 erfolgt der Start 35 des Programms. Im Programmteil 36 werden die Daten aus dem nichtflüchtigen Speicher ausgelesen und in den Arbeitsspeicher des Mikrocomputers übernommen.

Diese Daten umfassen die Tabellenwerte, den Korrekturfaktor und die Information, ob bereits ein Erstabgleich durchgeführt wurde. Letzterer ist bei der ersten Inbetriebnahme FK = 1. Im Programmteil 37 werden die Tabellenwerte mit dem Korrekturfaktor multipliziert und wieder im Arbeitsspeicher abgelegt. Bei 38 verzweigt sich das Programm in Abhängigkeit davon, ob bereits ein Erstabgleich durchgeführt wurde. Ist dieses der Fall, so wird das Programm bei 39 beendet.

Wurde jedoch noch kein Erstabgleich durchgeführt, so werden bei leerem Tank im Programmteil 42 vier Messungen durchgeführt, deren Ergebnisse bei 43 gemittelt werden, worauf bei 44 der Korrekturfaktor FK durch Division durch den Tabellenwert "leer" ermittelt und in den nichtflüchtigen Speicher eingeschrieben wird. Die im Arbeitsspeicher befindlichen Tabellenwerte werden bei 45 mit dem Korrekturfaktor FK multipliziert. Im Programmteil 46 wird die Information, daß ein Erstabgleich durchgeführt ist, in den nichtflüchtigen Speicher eingeschrieben.

Der Start des Programms für den normalen Meßablauf gemäß Fig. 6 erfolgt bei 50 durch Einschalten der Spannung an der Klemme 15 - also beim Einschalten der Zündung. Daraufhin wird im Programmteil 51 der gespeicherte Anzeigewert an das Meßinstrument (Fig. 3) ausgegeben. Bei 52 verzweigt sich das Programm in Abhängigkeit davon, ob die Anzeige kleiner als der Reservebereich ist. Zutreffendenfalls wird bei 53 die Warnlampe eingeschaltet. Ist die Anzeige größer als oder gleich dem Reservebereich, wird die Warnlampe bei 54 ausgeschaltet.

In den Programmteilen 55 und 56 wird nacheinander der Digitalgeber 2 (Fig. 1) und der Analoggeber 3 bestromt, worauf die jeweiligen Widerstände gemessen und die Meßwerte gespeichert werden.

Aus dem Wert des Digitalgebers wird bei 57 erkannt, ob der Füllstand unter- oder oberhalb des durch den Digitalgeber vorgegebenen Pegels ist. Bei 58 erfolgt eine Verzweigung in Abhängigkeit davon, ob der Digitalgeber mindestens fünfmal nacheinander oberhalb des Flüssigkeitsstandes ist. Ist dieses nicht der Fall, erfolgt bei 59 die Kennlinienanpassung, worauf ein Programmteil 60 zur Dämpfung der durch den schwappenden Kraftstoff verursachten Schwankungen der Meßwerte folgt. Bei 61 erfolgt die Ausgabe des anzuzeigenden Wertes an das Meßinstrument. Solange eine Meßpause noch nicht beendet ist, wird bei 62 das Programm derart verzweigt, daß die Ausgabe 61 wiederholt wird. Die Meßpause ermöglicht eine Abkühlung des Gebers zwischen zwei aufeinanderfolgenden Messungen. Ist die Meßpause beendet, wird das Programm mit dem Bestromen der Geber, dem Messen und dem Speichern der Meßwerte bei 55 und 56 wiederholt.

Ist bei der Verzweigung 58 der Digitalgeber mindestens fünfmal nacheinander oberhalb des Flüssigkeitsspiegels, so wird bei 63 der gemessene Wert des Analoggebers mit dem für Reserve vorgesehenen Tabellenwert verglichen. Stimmen die Werte überein, so ist kein Nachabgleich erforderlich. Nach der Programmverzweigung 64 wird in diesem Fall das Programm bei 59 fortgesetzt. Sind die zu vergleichenden Werte jedoch verschieden, so wird der Korrekturfaktor bei 65 neu errechnet und die Tabelle im Arbeitsspeicher angepaßt. Im Programmteil 66 wird der neu errechnete Korrekturfaktor im nichtflüchtigen Speicher abgelegt.

## Patentansprüche

1. Gerät zur Messung des Füllstands eines Kraftstofftanks eines Kraftfahrzeugs, bei dem Geber ein vom Füllstand abhängiges Gebersignal an eine elektronische Signalverarbeitungseinheit abgibt, in der ein Programm zur Auswertung des Gebersignals und zur Ansteuerung einer Anzeigevorrichtung vorgesehen ist, dadurch gekennzeichnet, daß in der elektronischen Signalverarbeitungseinheit (10) neben dem Programm zur Auswertung des Gebersignals und zur Ansteuerung der Anzeigevorrichtung (23) weiterhin ein Programm vorgesehen ist, welches bei der erstmaligen Inbetriebnahme der mit dem Geber zusammengeschalteten elektronischen Signalverarbeitungseinheit bei einem bekannten Füllstand, vorzugsweise bei leerem Tank, aus dem Verhältnis zwischen dem Gebersignal und einem abgespeicherten Sollwert ein Korrekturwert bildet und in einem nichtflüchtigen Speicher (12) ablegt.

2. Gerät nach Anspruch 1, dadurch gekennzeichnet, daß im nichtflüchtigen Speicher (NV/RAM) (12) eine Tabelle die den Zusammenhang zwischen der Tankfüllung und dem Gebersignal darstellt, abgelegt ist.

3. Gerät nach Anspruch 2, dadurch gekennzeichnet, daß in den nichtflüchtigen Speicher (12) Korrekturwerte einschreibbar sind, welche bei mindestens einem bekannten Füllstand aus dem Gebersignal abgeleitet werden.

4. Gerät nach Anspruch 3, dadurch gekennzeichnet, daß die Korrekturwerte zusätzlich zur Tabelle einschreibbar sind.

5. Gerät nach Anspruch 3, dadurch gekennzeichnet, daß die Korrekturwerte durch Modifikation der Tabelle einschreibbar sind.

6. Gerät nach einem der vorhergehenden Ansprüche, dadurch gekennzeichnet, daß ein erster Abgleich bei mindestens einem vorgegebenen Füllstand durchführbar ist, daß dabei Korrekturwerte ermittelbar und einschreibbar sind und daß nach dem ersten Abgleich eine Information in den nichtflüchtigen Speicher (12) einschreibbar ist, welche den erfolgten ersten Abgleich bedeutet.

7. Gerät nach Anspruch 6, dadurch gekennzeichnet, daß ein weiterer Geber (2) vorgesehen ist, der ein binäres Gebersignal abgibt, das bei einem vorgegebenen Füllstand seinen Pegel ändert, und daß das binäre Gebersignal zusammen mit dem Gebersignal zur Bildung der Korrekturwerte herangezogen wird, wenn zuvor ein erster Abgleich erfolgt ist.

8. Gerät nach einem der vorhergehenden Ansprüche, dadurch gekennzeichnet, daß bei der Tabelle der Zusammenhang zwischen einem Ausgangssignal, das von der elektronischen Signalverarbeitungsschaltung (10, 11) an die Anzeigevorrichtung (23) gegeben wird, und den angezeigten Werten berücksichtigt ist.

9. Gerät nach einem der Ansprüche 6 bis 8, dadurch gekennzeichnet, daß der erste Abgleich bei leerem Tank durchgeführt wird.

10. Gerät nach einem der Ansprüche 6 bis 9, dadurch gekennzeichnet, daß die Durchführung des ersten Abgleichs von einem optischen oder akustischen Signal, vorzugsweise Aufleuchten einer Reserve-Anzeigeleuchte (24), anzeigbar ist.

11. Gerät nach Anspruch 2, bei welchem dem Geber (3) ein Strom zugeführt wird, dadurch gekennzeichnet, daß die Größe des Stroms bei mindestens einem Abgleichvorgang ermittelt und im nicht flüchtigen Speicher (12) abgelegt wird.

12. Gerät nach einem der vorhergehenden Ansprüche, dadurch gekennzeichnet, daß im nichtflüchtigen Speicher (12) weitere Informationen ablegbar sind.

13. Gerät nach einem der vorhergehenden Ansprüche, dadurch gekennzeichnet, daß im nichtflüchtigen Speicher (12) beim Abschalten der Betriebsspannung der zuletzt gültige Anzeigewert gespeichert und nach einem Wiedereinschalten ausgelesen und zur Anzeige gebracht wird.

14. Gerät nach einem der vorhergehenden Ansprüche, dadurch gekennzeichnet, daß in der elektronischen Signalverarbeitungseinheit mehrere wahlweise aktivierbare Programme oder Programmodule vorgesehen sind und daß im nichtflüchtigen Speicher (12) Informationen darüber abgelegt sind, welche Programme oder Programmodule jeweils aktiviert werden.

15. Gerät nach einem der vorhergehenden Ansprüche, dadurch gekennzeichnet, daß in der elektronischen Signalverarbeitungseinheit ein Programm vorgesehen ist, das bei Defekten Fehlermeldungen abgibt, und daß gegebenenfalls abgegebene Fehlermeldungen in dem nichtflüchtigen Speicher abgelegt werden.

## Claims

1. Apparatus for measuring the liquid level of a fuel tank of a motor vehicle, wherein a signal emitter sends a signal dependent on the liquid level to an electronic signal-processing unit in which a programme is provided for the evaluation of the emitter signal and for operating an indicator device, characterised in that there is provided in the signal-processing unit (10), besides the programme for the evaluation of the emitter signal and for operating the indicator device (23), a programme which, the first time the electronic signal-processing unit connected-up to the emitter is brought into operation, at a known liquid level, preferably when the tank is empty, forms from the relationship between the emitter signal and a stored desired value a correction value and files this in a non-volatile memory (12).

2. Apparatus according to claim 1, characterised in that a table which represents the interrelationship between the tank contents level and the emitter signal is filed in the non-volatile memory (NVRAM) (12).

3. Apparatus according to claim 2, characterised in that correction values which are derived from the emitter signal at at least one known liquid level can be written into the non-volatile memory (12).

4. Apparatus according to claim 3, characterised in that the correction values can be written-in additionally to the table.

5. Apparatus according to claim 3, characterised in that the correction values can be written-in by modification of the table.

6. Apparatus according to one of the preceding claims, characterised in that a first adjusting operation can be carried out at at least one predetermined liquid level, that correction values can be ascertained and written-in thereat, and that after the first adjusting operation there can be written into the non-volatile memory (12) an item of information which signifies that a first adjusting operation has been carried out.

7. Apparatus according to claim 6, characterised in that a further signal emitter (2) is provided which emits a binary signal which changes its level at a predetermined liquid level, and that the binary signal emitter signal is made use of together with the emitter signal to form the correction values when a first adjusting operation has been carried out previously.

8. Apparatus according to one of the preceding claims, characterised in that the interrelationship between an output signal delivered by the electronic signal-processing circuit (10, 11) to the indicator device (23), and the displayed values, is taken into account in the table.

9. Apparatus according to one of claims 6 to 8, characterised in that the first adjusting operation is carried out with the tank empty.

10. Apparatus according to one of claims 6 to 9, characterised in that the carrying-out of the first adjusting operation is adapted to be indicated by a visual or acoustic signal, preferably the lighting-up of a reserve-indicating light (24).

11. Apparatus according to claim 2, wherein the emitter (3) is supplied with a current, characterised in that the magnitude of the current is ascertained at at least one adjusting operation and filed in the non-volatile memory (12).

12. Apparatus according to one of the preceding claims, characterised in that further data can be filed in the non-volatile memory (12).

13. Apparatus according to one of the preceding claims, characterised in that when the operating voltage is switched off the last-valid display value is stored in the non-volatile memory (12), to be read out and displayed after renewed switching-on.

14. Apparatus according to one of the preceding claims, characterised in that a plurality of selectively activatable programmes or programme modules are provided in the electronic signal-processing unit, and that data are filed in the non-volatile memory (12) as to which programmes or programme modules are activated in each case.

15. Apparatus according to one of the preceding claims, characterised in that a programme which emits error messages in the event of defects is provided in the electronic signal-processing unit, and that any error messages which may be emitted are filed in the non-volatile memory.

## Revendications

1. Dispositif de mesure du niveau de remplissage d'un réservoir de carburant de véhicule automobile, dans lequel un émetteur applique un signal, dépendant du niveau de remplissage, à une unité de traitement électronique des signaux dans laquelle un programme est prévu pour l'interprétation du signal de l'émetteur et pour l'activation d'un dispositif d'affichage, caractérisé par le fait qu'il est par ailleurs prévu dans l'unité (10) de traitement électronique des signaux, outre le programme pour l'interprétation du signal de l'émetteur et pour l'activation du dispositif d'affichage (23), un programme qui, lors de la première mise en service de l'unité de traitement électronique des signaux interconnectée avec l'émetteur, forme une valeur correctrice sur la base du rapport entre le signal de l'émetteur et une valeur de consigne mémorisée, en présence d'un niveau de remplissage connu et de préférence lorsque le réservoir est vide, puis stocke ladite valeur dans une mémoire rémanente.

2. Dispositif selon la revendication 1, caractérisé par le fait qu'un tableau, représentant la corrélation entre le remplissage du réservoir et le signal de l'émetteur, est stocké dans la mémoire rémanente (NV-RAM) (12).

3. Dispositif selon la revendication 2, caractérisé par le fait que des valeurs correctrices, dérivées du signal de l'émetteur en présence d'au moins un niveau de remplissage connu, peuvent être enregistrées dans la mémoire rémanente (12).

4. Dispositif selon la revendication 3, caractérisé par le fait que les valeurs correctrices sont enregistrables en plus du tableau.

5. Dispositif selon la revendication 3, caractérisé par le fait que les valeurs correctrices sont enregistrables par modification du tableau.

6. Dispositif selon l'une des revendications précédentes, caractérisé par le fait qu'un premier équilibrage peut être effectué en présence d'au moins un niveau de remplissage préétabli ; par le fait que des valeurs correctrices peuvent alors être établies et enregistrées ; et par le fait qu'une information, signifiant que le premier équilibrage a été effectué, peut être enregistrée dans la mémoire rémanente (12) à l'issue du premier équilibrage.

7. Dispositif selon la revendication 6, caractérisé par le fait qu'il est prévu un émetteur supplémentaire (2), délivrant un signal binaire dont le niveau varie en présence d'un niveau de remplissage préétabli ; et par le fait que le signal binaire de l'émetteur est exploité conjointement au signal de l'émetteur, pour former les valeurs correctrices, lorsqu'un premier équilibrage a été au préalable effectué.

8. Dispositif selon l'une des revendications précédentes, caractérisé par le fait que la corrélation existant entre un signal de sortie, appliqué au dispositif d'affichage (23) par l'unité (10) de traitement électronique des signaux, et les valeurs affichées, est prise en considération dans le tableau.

9. Dispositif selon l'une des revendications 6 à 8, caractérisé par le fait que le premier équilibrage est effectué lorsque le réservoir est vide.

10. Dispositif selon l'une des revendications 6 à 9, caractérisé par le fait que l'exécution du premier équilibrage peut être affichée par un signal optique ou acoustique, de préférence par l'éclairage d'un témoin lumineux (24) de réserve.

11. Dispositif selon la revendication 2, dans lequel un courant est délivré à l'émetteur (3), caractérisé par le fait que l'intensité du courant est établie lors d'au moins un processus d'équilibrage, puis est stockée dans la mémoire rémanente (12).

12. Dispositif selon l'une des revendications précédentes, caractérisé par le fait que des informations supplémentaires peuvent être stockées dans la mémoire rémanente (12).

13. Dispositif selon l'une des revendications précédentes, caractérisé par le fait que la valeur affichée valable en dernier lieu est mémorisée dans la mémoire rémanente (12) lors de la mise hors fonction de la tension de service, puis est extraite et visualisée après un réenclenchement.

14. Dispositif selon l'une des revendications précédentes, caractérisé par le fait que plusieurs programmes ou modules de programmes, activables sélectivement, sont prévus dans l'unité de traitement électronique des signaux ; et par le fait que des informations, relatives aux programmes ou modules de programmes respectivement activés, sont stockées dans la mémoire rémanente (12).

15. Dispositif selon l'une des revendications précédentes, caractérisé par le fait qu'un programme, délivrant des messages d'erreur en cas de défaillances, est prévu dans l'unité de traitement électronique des signaux ; et par le fait que des messages d'erreur, éventuellement délivrés, sont stockés dans la mémoire rémanente.
